# EUROPEAN PATENT APPLICATION

(11) **EP 3 300 990 A1**
(43) Date of publication of application: **04.04.2018**
(21) Application number: 17152206.3
(22) Date of filing: 19.01.2017
(51) Int. Cl.: B62B 5/00, B62B 7/08, B62B 7/12

(54) **FOLDABLE BABY STROLLER**

(30) Priority: 30.09.2016 CN 201610868884
(71) Applicant: Dongguan Master Kids Products Co., Ltd., Guangdong 523462 (CN)
(72) Inventor: XU, Jiahong, Dongguan, Guangdong 523462 (CN)
(74) Representative: Karakatsanis, Georgios

(57) **Abstract**

The present invention discloses a foldable baby stroller comprising a frame, a seat and a storage bag (7). The frame is composed of a joint unit (1), front tubes (2), rear tubes (3), a support (4), a handrail (5) and a push handle assembly (6), where the front tubes, the rear tubes, the support, the handrail, and the push handle are connected with the joint unit. The lower parts of the front tubes and the rear tubes are provided with front wheels (21) and rear wheels (31), respectively. The seat (41) for a baby is installed on the support. The storage bag consists of a bag body (7) and straps (71) connected therewith, and the bag body is connected with the rear tubes (3). When the frame is folded, a user could put on the straps and shoulder up the folded baby stroller. In this way, both hands can be freed for other chores, for example, handling other objects or embracing a baby with arms. In addition, the storage bag, which provides a storage space, can be used to contain objects, extending the use of the foldable baby stroller.

## Description

### Technical Field

The present invention relates to a baby stroller, in particular to a foldable baby stroller.

### Background Art

The baby stroller is a mobile carrying tool designed for babies as adults have fun outside with babies or shopping and others. It is popular among the vast group of parents for the extended use of storage of small articles.

The existing foldable baby stroller mainly comprises a foldable frame and a seat. The frame is composed of a joint unit, front tubes, rear tubes, a support, a handrail and a push handle assembly, where the front tubes, the rear tubes, the support, the handrail, and the push handle are connected with the joint unit. The lower parts of the front tubes and the rear tubes are provided with front wheels and rear wheels, respectively. The seat is installed on the support for a baby. When not in use, the rear tubes, the support, the handrail and the push handle assembly are folded towards the front tubes. In this way, the folded baby stroller can occupy less space.

However, the existing foldable baby stroller still shows some disadvantages resulted from that after the frame is folded, the folded baby stroller cannot store objects any more. What's worse, the folded baby stroller to be carried has to be lifted with one hand; this will cause great inconvenience for those parents who have already embraced a baby with arms.

### Disclosure of the Invention

The present invention aims to provide a foldable baby stroller that can be shouldered up by the user and store articles after folded.

For this purpose, the invention provides a foldable baby stroller comprising:
a frame composed of a joint unit, front tubes, rear tubes, a support, a handrail and a push handle assembly, where the front tubes, the rear tubes, the support, the handrail, and the push handle are connected with the joint unit. The lower parts of the front tubes and the rear tubes are provided with front wheels and rear wheels, respectively.
a seat for a baby installed on the support;
a storage bag consisting of a bag body and straps connected there with. The bag body is connected with the rear tubes. As the rear tubes, the support, the handrail and the push handle assembly are folded towards the front tubes, a user could put on the straps and shoulder up the folded baby stroller.

The rear tubes in the present invention are connected with the storage bag. The bag body of the storage bag is connected with the straps. After the rear tubes, the support, the handrail and the push handle assembly are folded to the front tubes in such a way that the user can put on the straps and shoulder up the foldable baby stroller after the baby stroller is folded as a whole. To carry the folded baby stroller, the user has no need to lift it with hands. Both hands are freed for other chores, for example, handling other objects or embracing a baby with arms. In addition, the storage bag, which provides a storage space, can be used to contain objects, extending the use of the foldable baby stroller.

### Brief Description of Drawings

Fig.1 is a three-dimensional schematic diagram of the foldable baby stroller that is unfolded.
Fig.2 is a three-dimensional schematic diagram of the foldable baby stroller that is unfolded from the other perspective.
Fig.3 is a side view of the foldable baby stroller that is folded.
Fig.4 is a schematic diagram of the storage bag of the foldable baby stroller.
Fig.5 is a schematic diagram of the foldable baby stroller that is shouldered up after folded.
Fig.6 is a side view of the foldable baby stroller that is folded with the pull rod pulled out.

### Best Mode for Carrying out the Invention

The embodiments of the invention will now be clearly and completely described, by way of example only, with reference to the accompanying drawings. Obviously, not all embodiments are described hereby. All other embodiments obtained by those of ordinary skill in the art based on the embodiments of the present invention without creative effort are within the scope of the present invention.

It should be noted that the directive instructions involved in the embodiments of the invention (such as upper, lower, left, right, front and rear...) only used for explaining the position relation, the moving status and more among all parts in a certain posture (as shown in figures). Once the certain posture changes, the directive instructions will change accordingly.

The invention provides a foldable baby stroller.

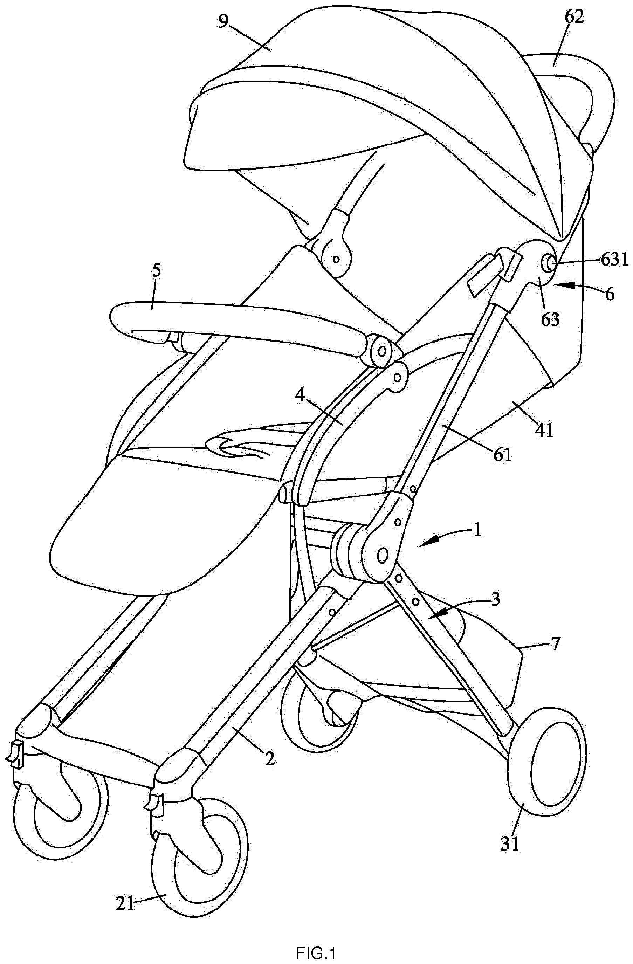

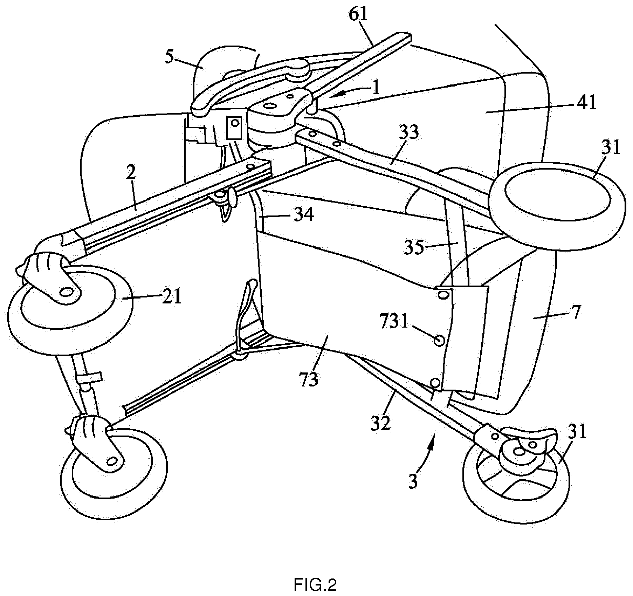

As shown in figures 1 to 6, the foldable baby stroller in this embodiment comprises a frame, a seat 41 and a storage bag.

The frame comprises a joint unit 1, front tubes 2, rear tubes 3, a support 4, a handrail 5 and a push handle assembly 6, where the front tubes, the rear tubes, the support, the handrail and the push handle assembly are connected with the joint unit. The lower parts of the front tubes 2 and the rear tubes 3 are provided with front wheels 21 and rear wheels 31.

The seat 41 is installed on the support 4 for a baby when the frame is unfolded (see Fig.1). The structure and the installation method of the seat 41 are available in the prior art and known to those skilled of prior art, and here will not be repeated;

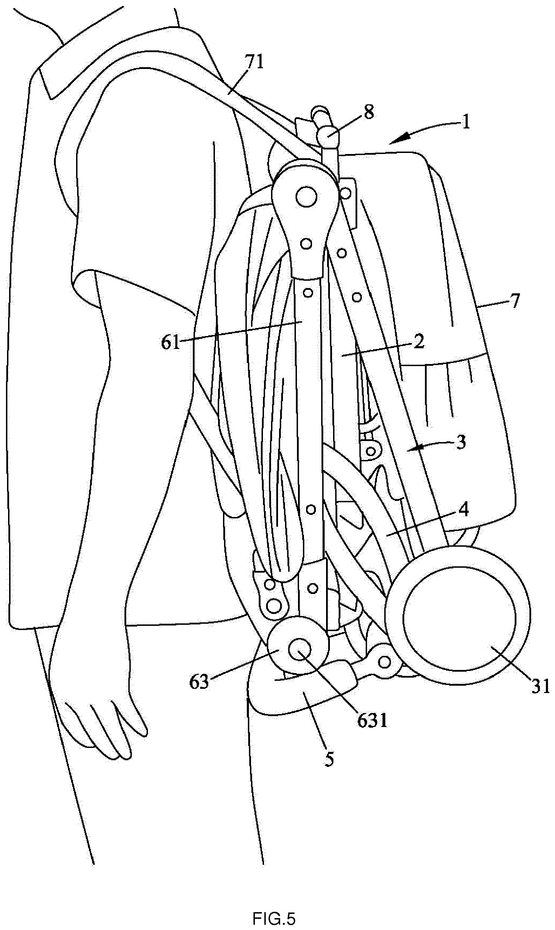

The storage bag consists of a bag body 7 and straps 71 connected thereon. The bag body 7 is connected with the rear tubes 3. When the rear tubes 3, the support 4, the handrail 5 and the push handle assembly 6 are folded to the front tubes 2, the foldable baby stroller is thus folded. Then a user can put on the straps 71 (see Fig.5) and shoulder up the folded baby stroller. In this way, to carry the foldable baby stroller, the user has no need to lift it with hands, and both hands can be freed for other chores, such as handling other objects or embracing a baby with arms and more. In addition, the storage bag, which provides a storage space, can be used to contain objects, extending the use of the foldable baby stroller.

In particular, the structure of the joint unit 1 and its connection to the front tubes 2, the rear tubes 3, the support 4, the handrail 5, and the push handle assembly 6 are available in the prior art and are well known to those skilled of the art, for example, which can be implemented as disclosed in the patent application of Chinese Patent Publication No. "CN104828120", so as to ensure the smooth folding and unfolding of the frame. A locking structure (not shown) as well as an unlocking structure (not shown) may be provided to lock the front tubes 2, the rear tubes 3 and others when unfolded, if necessary. When unlocking is required, the front tubes 2, the rear tubes 3, the support 4, the handrail 5, and the push handle assembly 6 are folded and the locking structure and the unlocking structure are also well known to those skilled of the art, you may refer to disclosure in the patent application of Chinese Patent Publication No. "CN 104828120", and its structure and principle of operation are not described herein.

In particular, the shape and structure of the bag body 7 have a variety of embodiments, the same as, for example, the shape and structure of the backpack of the prior art. The bag body has one or more storage spaces. Since the bag structure is known in the art and is well known to those skilled of the art, its specific structure and manner of use will not be described here.

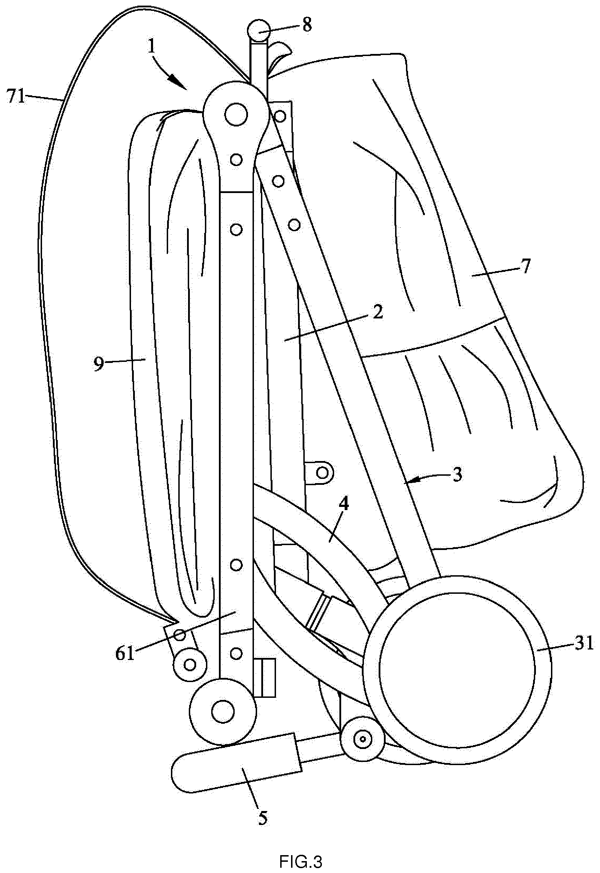

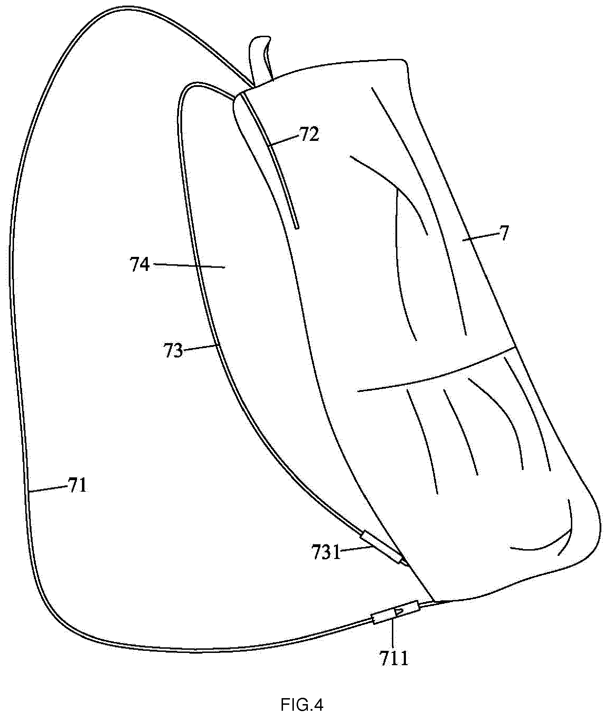

In this embodiment of the present invention, as shown in Fig.3 and Fig.4, at least one strap 71, preferably two, are provided. Their connection to the bag body 7 differs in different embodiments. For example, each of the straps 71 may be sewn or riveted to the bag body 7 at both ends, or sewn or riveted to the bag body 7 at one end and detachably connected with the bag body 7 at the other end. In addition, it is also possible that both ends can be detachably connected to the bag body 7.

In one of the embodiments, as shown in Fig.3 and Fig.4, one end of each strap 71 is sewn or riveted to the upper part (generally of the backside) of the bag body 7, the other end twists downwards and penetrates the front tubes 2 backwards to be detachably connected with the lower part (generally of the backside) of the bag body 7 via a first connector 711. After connection, there is a space formed between the straps 71 and the front tubes 2 for the user to shoulder up. To be specifically, the first connector 711 is composed of a first male part and a first female part, which are arranged at the other end of each strap 71 and the lower part of the bag body 7, respectively. As the first male part and the first female part are fastened together, the other end of each strap 71 is detachably connected with the lower part of the bag body 7. On the contrary, by unfastening the first male part and the first female part, the other end of each strap 71 can be separated from the lower part of the bag body 7. This way of connection is simple and convenient to effect. It can be understood that the first connector can be a hook-and-loop fastener, a snap fastener or a buckle and others. As they are available in the prior art and well known to technicians of this field, their structures and operation principle will not be elaborated herein.

In the embodiments of the present invention, as shown in Fig.3 and Fig.4, the upper part of the backside of the bag body 7 is provided with a storage chamber 72. As the other end of each strap 71 is separated from the lower part of the bag body 7, the straps 71 can be partially stored in the storage chamber 72 in such a way that the straps 71 is protected from falling to the ground and being stained or pulling other objects due to its length. Moreover, the straps 71, partially stored in the storage chamber 72, looks beautiful. Particularly, the storage chamber 72 is a pocket-shaped storage space opened or sewn to the upper part of the backside of the bag body 7.

It should be noted that each strap 71 might be provided with a tightness adjuster (not shown) for adjusting length of the straps 71 in order to fit for different users having different bag carrying habits due to different figures. Since the tightness adjuster for adjusting the length of the straps 71 is known in the art and is well known to those skilled in the art, for example, it is often used on a school bag, and its structure and method of use are not described here.

Particularly, as shown in Figures 1-3, the rear tubes 3 are provided with a left support tube 33 and a right support tube 32, which are oppositely arranged. The upper parts of the left support tube 33 and the right support tube 32 are connected with the joint unit 1, and the lower parts thereof are connected with the corresponding rear wheels 31, respectively. An upper crossbar 34 and a lower crossbar 35 that can improve structural strength are connected between the left support tube 33 and the right support tube 32, and the bag body 7 is connected with the upper crossbar 34 and the lower crossbar 35.

In the embodiments of the present invention, there are various embodiments of the connection between the bag body 7 and the upper and lower crossbars 34 and 35, for example, by binding the bag body 7 on the upper crossbar 34 and the lower crossbar 35 up through strings (not shown). or by coupling it on the upper crossbar 34 and the lower crossbar 35.

In a preferable embodiment, the upper part of the bag body 7 is arranged below one end of each strap 71 and connected with one end of each limiting strap 73. The other end of the limiting strap 73 is connected with the position of the bag body 7 above the other end of the strap. A limiting space 74 is enclosed by each limiting strap 73 and the bag body 7, in which the upper crossbar 34 and the lower crossbar 35 can be sleeved in a way that the bag body 7 can be installed thereon.

It can be understood that at least one limiting strap 73 is provided, and there are many embodiments in the connection with the bag body 7. For example, each of the limiting straps 73 may be sewn or riveted to the bag body 7 at both ends, or sewn or riveted to the bag body 7 at one end and detachably connected with the bag body 7 at the other end. In addition, it is also possible that both ends can be detachably connected to the bag body 7.

In an embodiment, one end of each limiting strap 73 is sewn or riveted to the upper part of the bag body 7, and the other end is detachably connected with the lower part of the bag body 7 through a second connector 731. Specifically, the second connector 731 consists of a second male part and a second female part, which are arranged at the other end of each limiting strap 73 and the lower part of the bag body 7, respectively. As the second male part and the second female part are fastened together, the other end of each limiting strap 73 is detachably connected with the lower part of the bag body 7. On the contrary, by unfastening the second male part and the second female part, the other end of each strap limiting 73 can be separated from the lower part of the bag body 7. This way of connection is simple and convenient to effect. It can be understood that the second connector 731 can be a hook-and-loop fastener, a snap fastener or a buckle and others. As they are available in the prior art and well known to technicians of this field, their structures and operation principle will not be elaborated herein.

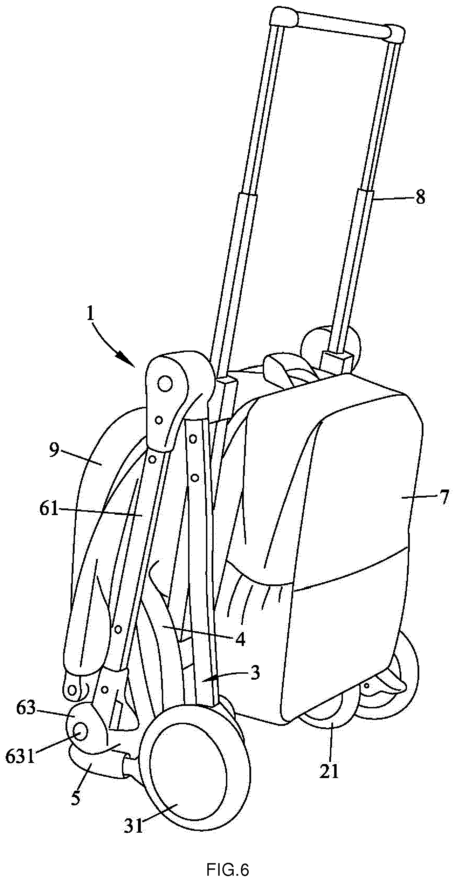

In the embodiments of the invention, as shown in Fig.3 and Fig.6, the front tubes 2 are provided with upwardly drawable telescopic pull rods 8. When hands are freed, the pull rods 8 can be drawn out, and the foldable baby stroller in the folded state can be pushed forwards by pulling the pull rods 8, and in so doing, burden on shoulders of the user can be alleviated. When not in use, the pull rods 8 can be pushed back and mostly stored in the front tubes 2 such that the normal use of the baby stroller cannot be affected.

Particularly, as shown in Fig.1 and Fig.3, the push handle assembly 6 comprises a push handle rod 61 with the lower end installed on the joint unit 1, and a push handle 62, which is installed at the upper end of the push handle rod 61 through a bending joint 63 and foldable relative to the push handle rod 61. When to fold the baby stroller, the push handle 62 is folded towards the push handle rod 61 to resultantly reduce occupation space. Further, each bending joint 63 is provided with a locking device inside, and an unlocking button 631 of each locking device is arranged on the outer side of each bending joint 63. When the push handle 62 is folded to the push handle rod 61, the locking device can be unlocked by pressing the unlocking button 631. When the unlocking button 631 is released, the locking device can be locked again, at this time the push handle 62 is stopped from rotating relative to the push handle rod 61. It should be noted that both the bending joint 63 and the locking device are known in the art and are well known to those skilled in the art, for example, the bending joint and the locking device disclosed in the Chinese patent publication "CN 104828120". Accordingly, their structure and working principle will not be repeated herein.

Further, as shown in Fig. 1, the bending joint 63 is further connected to a bracket which is foldable with respect to the push handle rod 61, and a sunshade 9 is mounted on the bracket for shading the seat 41 during use. As such, the baby who sits in the seat 41 can be protected from being sunburned. It should be noted that both the bracket and the bending joint 63 are known in the art and are well known to those skilled in the art, for example, the method disclosed in the Chinese patent publication "CN 104828120". Accordingly, their way of connection and the working principle will not be repeated herein.

The foregoing description is merely a preferred embodiment of the present invention and is not to be taken as limiting the scope of the invention. Structural transformation equivalence made on the basis of the specifications and accompanied drawings, or direct/indirect application in other related technical fields also fall within the scope of the claims of the present invention.

## Claims

1. A foldable baby stroller, comprising:
a frame composed of a joint unit, front tubes, rear tubes, a support, a handrail and a push handle assembly, where the front tubes, the rear tubes, the support,
the handrail, and the push handle are connected with the joint unit. The lower parts of the front tubes and the rear tubes are provided with front wheels and
rear wheels, respectively.
a seat for a baby installed on the support;
a storage bag consisting of a bag body and straps connected there with. The bag body is connected with the rear tubes. As the rear tubes, the support, the handrail and the push handle assembly are folded towards the front tubes, a user could put on the straps and shoulder up the folded baby stroller.

2. The foldable baby stroller according to Claim 1, wherein at least one strap is provided. Two ends of each strap are sewn or riveted to the bag body; or one end of each strap is sewn or riveted to the bag body, while the other is detachably connected with the bag body; or two ends of each strap are detachably connected with the bag body.

3. The foldable baby stroller according to Claim 2, wherein one end of each strap is sewn or riveted to the upper part of the bag body, and the other end twists downwards and penetrates the front tubes backwards to be detachably connected with the lower part of the bag body via a first connector. After connection, there is a space formed between the straps and the front tubes for the user to shoulder up.

4. The foldable baby stroller according to Claim 3, wherein the first connector is a hook-and-loop fastener, a snap fastener or a buckle, consisting of a first male part and a first female part, which are arranged at the other end of each strap and the lower part of the bag body, respectively. As the first male part and the first female part are fastened together, the other end of each strap is detachably connected with the lower part of the bag body.

5. The foldable baby stroller according to Claim 1, wherein the upper part of the back side of the bag body is provided with a storage chamber. When the other end of each strap is separated from the lower part of the bag body, the straps can be partially stored in the storage chamber.

6. The foldable baby stroller according to Claim 1, wherein the front tubes are provided with upwardly drawable telescopic pull rod.

7. The foldable baby stroller according to Claim 1, wherein the push handle assembly comprises a push handle rod with the lower end installed on the joint unit, and a push handle, which is installed at the upper end of the push handle rod through a bending joint and foldable relative to the push handle rod.

8. The foldable baby stroller according to any one of Claims 1-7, wherein the rear tubes are provided with a left support tube and a right support tube, which are oppositely arranged. The upper parts of the left support tube and the right support tube are connected with the joint unit, and the lower parts thereof are connected with the corresponding rear wheels, respectively. An upper crossbar and a lower crossbar are connected between the left support tube and the right support tube, and the bag body is connected with the upper crossbar and the lower crossbar.

9. The foldable baby stroller according to Claim 8, wherein the upper part of the bag body is arranged below one end of each strap and connected with one end of each limiting strap. The other end of the limiting strap is connected with the position of the bag body above the other end of the strap. Each limiting strap and the bag body, in which the upper crossbar and the lower crossbar can be sleeved in a way that the bag body can be installed thereon, encloses a limiting space.

10. The foldable baby stroller according to Claim 9, wherein one end of each limiting strap is sewn or riveted to the upper part of the bag body, and the other end is detachably connected with the lower part of the bag body via a second connector.
